# EUROPEAN PATENT SPECIFICATION

(11) **EP 3 899 294 B1**
(45) Date of publication and mention of the grant of the patent: **24.01.2024**
(21) Application number: 19831863.6
(22) Date of filing: 23.12.2019
(51) Int. Cl.: F16B 43/00, H01H 19/58

(54) **DEVICE FOR THE TRANSFER OF ELECTRIC CURRENT INCLUDING A CONTACT WASHER**
VORRICHTUNG ZUR ÜBERTRAGUNG VON ELEKTRISCHEM STROM MIT EINER KONTAKTUNTERLEGSCHEIBE
DISPOSITIF DE TRANSFERT DE COURANT ÉLECTRIQUE COMPRENANT UNE RONDELLE DE CONTACT

(30) Priority: 23.12.2018 GB 201821168
(43) Date of publication of application: 27.10.2021
(73) Proprietor: Secheron Hasler UK Limited, Chadderton Greater Manchester M24 1GS (GB)
(72) Inventor: ROCHAT, Frédéric, 1676 Chavennes-les-Fonts (CH); NAZERI, Christopher, Heywood Lancashire OL10 4BQ (GB)
(74) Representative: McDonough, Jonathan
(86) International application number: PCT/GB2019/053685
(87) International publication number: WO 2020/136371

(56) References cited:
- EP-A2- 0 717 424
- DE-B1- 1 690 001
- JP-A- 2005 219 650
- US-A- 2 177 481
- US-A- 3 801 753

## Description

The present invention relates to a device for the transfer of electric current comprising first and second spaced apart electrically conductive members and a contact washer sandwiched therebetween.

It is often desired to transfer current from one electrically conductive member to another, where one of the members rotates relative to the other. For small angles of rotation a flexible connector can be used. This is difficult for large angles of rotation and impossible for continuous rotation.

In the case of continuous rotation it is known to sandwich an electrically conductive washer between the two electrically conductive members. For high current applications, typically for currents over around 10,000 Amps) this arrangement has a number of drawbacks. Whilst the washer is substantially flat it tends to contact each member at only a very few discreet contact points. This results in a high joint resistance which in turn causes overheating. Further, current constriction at these contact points causes a repulsive force between the washer and the member. A large spring force is required to maintain the washer in contact with the member. This is typically achieved by compressing the washer. However, known washers exert a maximum restoring spring force in the region of the mid compression point which drops away sharply from this point. The spring force exerted by the washer can therefore be difficult to control and can change if the washer is compressed in use. US3801753A discloses a known device for transferring electric current between two members.

The present invention seeks to overcome the problems of the prior art.

The invention is as defined in claim 1.

Accordingly, the invention provides a device comprising a contact washer comprising a metal plate defined by first and second faces and a peripheral edge, the metal plate having an aperture extending therethrough defined by an aperture edge of the plate;
the washer further comprising at least one of -
(a) a plurality of inner slots, each inner slot extending through the plate from the first face to the second face and from the aperture edge part way to the peripheral edge; and
(b) a plurality of outer slots, each outer slot extending through the plate from the first face to the second face and from the peripheral edge part way to the aperture edge.

The slots in the washer divide the washer into a number of fingers. In use each finger independently contacts the adjacent member. This forces the current flowing through the washer from the central aperture to the peripheral edge flow in a number of parallel radial paths. This significantly reduces the heating at the contact between washer and member. It also significantly reduces the repulsive force due to current constriction. Further, as the washer is compressed the fingers tend to twist. This produces a restoring spring force which is approximately linearly dependent on the degree of compression of the washer.

The contact washer comprises a plurality of inner slots.

According to the invention the inner slots are equally spaced apart around the aperture edge.

The contact washer comprises a plurality of outer slots.

According to the invention the outer slots are equally spaced apart around the peripheral edge.

According to the invention the contact washer comprises a plurality of inner slots and a plurality of outer slots, the inner slots and outer slots being interdigitated.

Preferably the inner slots are equally spaced apart around the aperture edge and the outer slots are equally spaced apart around the peripheral edge, each inner slot being equally spaced apart from the adjacent outer slots and vice versa.

The metal plate is frustoconical.

Preferably the contact washer further comprises an electrically conductive coating layer coating the metal plate, the electrical conductivity of the coating layer being higher than that of the metal plate.

According to the invention the device for the transfer of electric current further comprises
a first electrically conductive member;
a second electrically conductive member spaced apart from the first;
the second member being adapted to rotate with respect to the first about a rotation axis; and,
a contact washer as described previously sandwiched between the first and second members with the rotation axis passing through the aperture, the peripheral edge abutting one member and the aperture edge abutting the other member.

Preferably the device further comprises a third electrically conductive member arranged on the opposite side of the second electrically conductive member to the first; and,
a further contact washer as described previously sandwiched between the second and third members with the rotation axis passing through the aperture, the peripheral edge of the further contact washer abutting one of the second and third members and the aperture edge of the further contact washer abutting the other of the second and third members.

Preferably the device further comprises a rotation axle extending along the rotation axis from the first member, through an aperture in the second member to the third member.

Preferably the second member is a wheel.

Preferably the device further comprises a current source connected to one of the first and second members.

Preferably the device further comprises a load connected to the other of the first and second members.

The present invention will now be described by way of example only and not in any limitative sense with reference to the accompanying drawings in which
Figure 1 shows, in perspective view, a contact washer;
Figure 2 shows the contact washer of figure 1 in plan view;
Figure 3 shows a device for the transfer of electric current according to the invention; and
Figure 4 shows a further embodiment of a device for the transfer of electric current according to the invention in cross section.

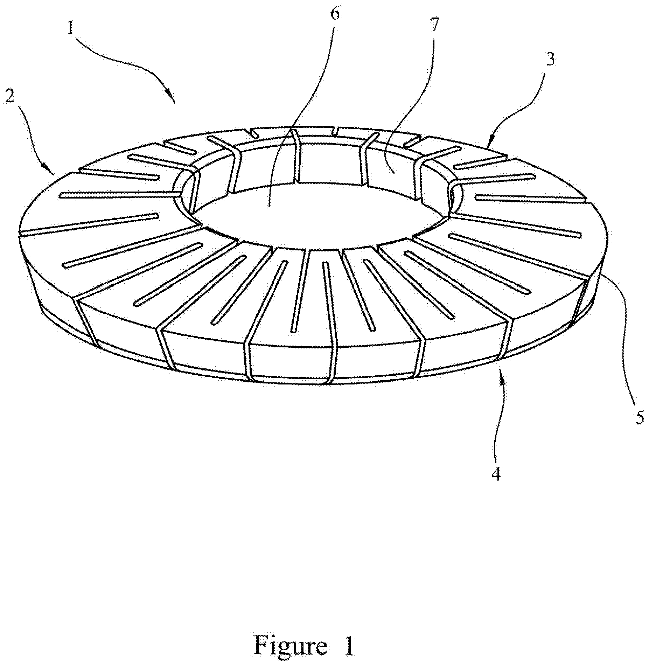

Shown in figure 1 is a contact washer 1. The contact washer 1 comprises a frustoconical metal plate 2. The metal plate 2 is typically a copper alloy, for example CW106 chromium, copper, zirconium. The metal plate 2 is optionally coated in a metal film of a high electrical conductivity than the metal plate. The film can for example be a silver film which is preferred due to its hardness and low oxidation.

The metal plate 2 is defined first and second faces 3,4 and a peripheral edge 5. An aperture 6 extends through the center of the plate 2 and is defined by an aperture edge 7 of the plate 2.

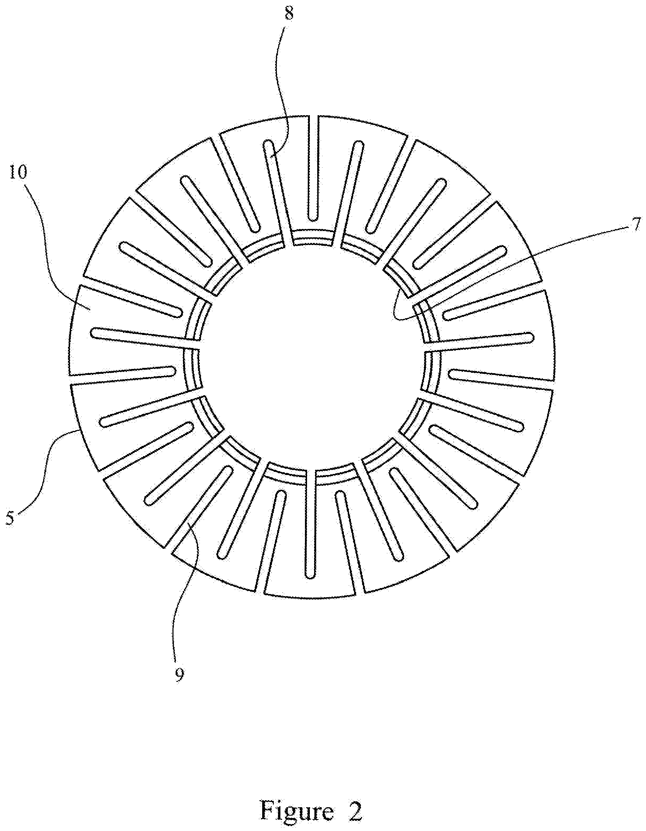

Figure 2 shows the contact washer 1 of figure 1 in plan view. A set of inner slots 8 extends through the plate 2 from the first face 3 to the second face 4 and from the aperture edge 7 part way to the peripheral edge 5. The inner slots 8 are equally spaced around the aperture edge 7 and extend radially outwards.

A set of outer slots 9 extends through the plate 2 from the first face 3 to the second face 4 and from the peripheral edge 5 part way to the aperture 6. The outer slots 9 are equally spaced around the peripheral edge 5 and extend radially inwards.

The inner slots 8 and outer slots 9 are interdigitated as shown with each inner slot 8 spaced equally from the adjacent outer slots 9 and vice versa. The slots 8,9 divide the plate into a number of radially extending fingers 10.

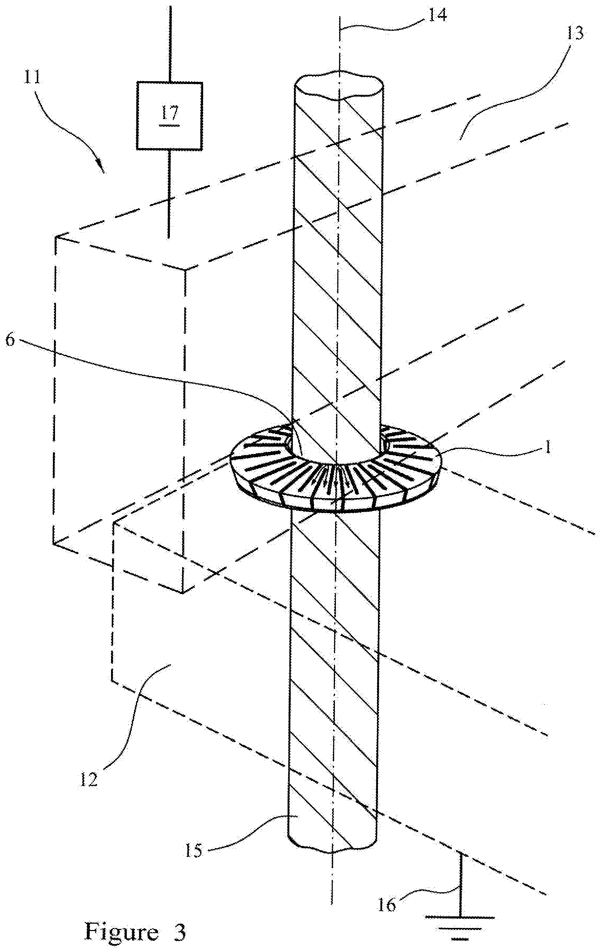

Shown in figure 3 is a device 11 for the transfer of electric current according to the invention. The device 11 comprises first and second electrically conductive members 12,13. The first member 12 is spaced apart from the second member 13. The second member 13 is adapted to rotate about a rotation axis 14 with respect to the first member 12. An electrically insulating rotation axle 15 extends along the rotation axis 14 between the first and second members 12,13.

Sandwiched between the first and second members 12,13 is a contact washer 1.

The rotation axle 15 extends through the central aperture 6. The first member 12 is connected to earth 16. The second member 13 is connected to a current source 17 adapted to provide a current to the second member 13.

In use a current flows from the current source 17 to the second member 13. From there it flows through the contact washer 1 to the first member 12 and then to earth 16. As previously described, each of the fingers 10 of the washer 1 defined by the inner and outer slots 8,9 abuts either the first member 12 or second member 13. This forces the current to flow along a series of substantially parallel paths radially outwards as shown. The current flowing through each point where the washer 1 contacts the first or second member 12,13 is therefore reduced. This reduces the heating at the contact points. More significantly, the repulsive force due to current constriction at each contact point is reduced. The repulsive force is a function of the current density. Having inner slots and outer slots 8,9 which divide the washer 1 into around ten fingers for example will typically reduce this repulsive force by a factor of greater than ten for a constant current flowing through the washer 1.

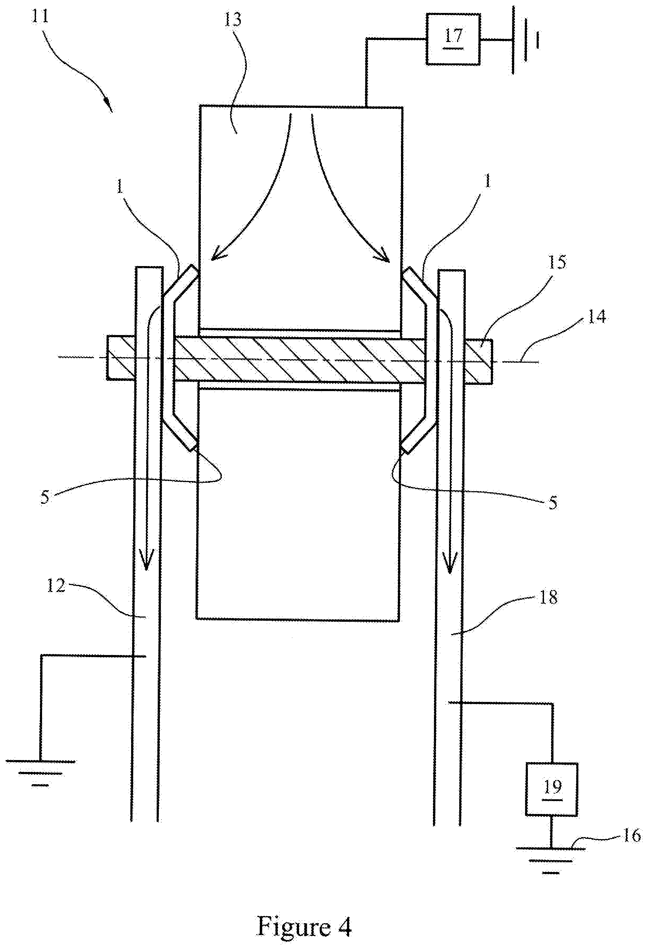

Shown in figure 4 is a further embodiment of a device 11 for the transfer of electric current according to the invention. The device 11 comprises first and third spaced apart electrically conductive members 12,18 in the form of support fingers. A second electrically conductive member 13 is arranged between the first and third support fingers 12,18 as shown. The second member 13 is typically a wheel. The wheel 13 is free to rotate about a rotation axis 14 with respect to the first and third members 12,18. A rotation axle 15 extends along the rotation axis 14 from the first member 12, through an aperture 6 in the center of the wheel 13 to the third member 18. A first contact washer 1 is sandwiched the wheel 13 and the first member 12. A second contact washer 1 is sandwiched between the wheel 13 and the third member 18.

in use a current is provided to the edge of the wheel 13 from a current source 17. The current flows through the wheel 13 then through the washers 1 and support fingers 12,18 to earth 16, typically via a load 19 as shown. As before, the design of the washers 1 reduces the heating at the point of contact between the washers 1 and the members 12,18. it also reduces the repulsive force due to current constriction at the contact points.

A significant consideration in the design of the device of figure 4 is the Lorentz force. Currents flow through the two support fingers 12,18 in the same direction and accordingly the two support fingers 12,18 are attracted to each other due to the Lorentz force. If the current is large the Lorentz force is correspondingly large and this may cause the support fingers 12,18 to deform towards each other slightly, so compressing the washers 1.

As the wheel 13 turns then friction between the wheel 13 and the washers 1 produces a frictional force on the peripheral edge 5 of each washer 1. This twists the fingers of each washer 1 slightly. As discussed above, when the fingers of a contact washer 1 are twisted then when the washer 1 is compressed it produces a restoring spring force which only weakly depends on the degree of compression. Accordingly, even though the support fingers 12,18 compress the washers 1 the wheel13 does not jam. The resistance to rotation of the wheel 13 is therefore substantially unchanged.

## Claims

1. A device (11) for the transfer of electric current comprising
a first electrically conductive member (12);
a second electrically conductive member (13) spaced apart from the first (12);
the second electrically conductive member (13) being adapted to rotate with respect to the first (12) about a rotation axis; and
a contact washer (1), the contact washer (1) comprising a frustoconical metal plate (2) defined by first (3) and second (4) faces and a peripheral edge (5), the metal plate (2) having an aperture (6) extending therethrough defined by an aperture edge (7) of the plate (2) the washer (1) further comprising
(a) a plurality of inner slots (8) equally spaced apart around the aperture edge (7), each inner slot (8) extending through the plate (2) from the first face (3) to the second face (4) and from the aperture edge (7) part way to the peripheral edge (5); and
(b) a plurality of outer slots (9) equally spaced apart around the peripheral edge (5) and interdigitated with the inner slots (8), each outer slot (9) extending through the plate (2) from the first face (3) to the second face (4) and from the peripheral edge (5) part way to the aperture edge (7);
the contact washer (1) being sandwiched between the first (12) and second (13) members with the rotation axis passing through the aperture (6), the peripheral edge (5) abutting one member and the aperture edge (7) abutting the other member.

2. A device (11) as claimed in claim 1, further comprising a third electrically conductive member (18)
arranged on the opposite side of the second electrically conductive member (13) to the first (12); and,
a further contact washer (1) comprising, a frustoconical metal plate (2) defined by first (3) and second (4) faces and a peripheral edge (5), the metal plate (2) having an aperture (6) extending therethrough defined by an aperture edge (7) of the plate (2) the washer (1) further comprising (a) a plurality of inner slots (8) equally spaced apart around the aperture edge (7), each inner slot (8) extending through the plate (2) from the first face (3) to the second face (4) and from the aperture edge (7) part way to the peripheral edge (5); and (b) a plurality of outer slots (9) equally spaced apart around the peripheral edge (5) and interdigitated with the inner slots (8), each outer slot (9) extending through the plate (2) from the first face (3) to the second face (4) and from the peripheral edge (5) part way to the aperture edge (7), the further contact washer (1) being sandwiched between the second (13) and third (18)
members with the rotation axis passing through the aperture (6), the peripheral edge (5) of the further contact washer (1) abutting one of the second (13) and third (18) members and the aperture edge (7) of the further contact washer (1) abutting the other of the second (13) and third (18) members.

3. A device (11) as claimed in claim 2, further comprising a rotation axle (14) extending along the rotation axis from the first member (12), through an aperture in the second member (13) to the third member (18).

4. A device (11) as claimed in any one of claims 1 to 3, wherein the second member (13) is a wheel.

5. A device (11) as claimed in any one of claims 1 to 4, further comprising a current source (17) connected to one of the first (12) and second (13) members.

6. A device (11) as claimed in claim 5, further comprising a load (19) connected to the other of the first (12) and second (13) members.

7. A device (11) as claimed in claim 1 wherein each inner slot (8) is equally spaced apart from the adjacent outer slots (9) and vice versa.

8. A device (11) as claimed in any one of claims 1 to 7, further comprising an electrically conductive coating layer coating the metal plate (2), the electrical conductivity of the coating layer being higher than that of the metal plate (2).

## Patentansprüche

1. Eine Vorrichtung (11) für die Übertragung von elektrischem Strom, die Folgendes umfasst:
ein erstes elektrisch leitendes Element (12);
ein zweites elektrisch leitendes Element (13), das in einem gewissen Abstand zum ersten Element (12) angeordnet ist;
wobei das zweite elektrisch leitende Element (13) so gestaltet ist, dass es sich in Relation zum ersten Element (12)
um eine Drehachse drehen kann; und
eine Kontaktscheibe (1), wobei die Kontaktscheibe (1) Folgendes umfasst:
eine kegelstumpfförmige Metallplatte (2), die durch eine erste (3) und
eine zweite (4) Fläche sowie einen umlaufenden Rand (5) definiert wird,
wobei die Metallplatte (2) eine Öffnung (6) aufweist, die durch die Platte hindurch verläuft und durch einen Öffnungsrand (7) der Platte (2) definiert wird;
wobei die Scheibe (1) ferner umfasst:
(a) eine Vielzahl von inneren Schlitzen (8), die in gleichmäßigem Abstand zueinander um den Öffnungsrand (7) angeordnet sind, wobei sich jeder innere Schlitz (8) durch die Platte (2) von der ersten Fläche (3) zur zweiten Fläche (4) und vom Öffnungsrand (7) über einen Teil der Strecke bis zum umlaufenden Rand (5) erstreckt; und
(b) eine Vielzahl von äußeren Schlitzen (9), die in gleichmäßigem Abstand zueinander um den umlaufenden Rand (5) angeordnet sind und fingerartig mit den inneren Schlitzen (8) ineinandergreifen, wobei sich jeder äußere Schlitz (9) durch die Platte (2) von der ersten Fläche (3) bis zur zweiten Fläche (4) und vom umlaufenden Rand (5) über einen Teil der Strecke bis zum Öffnungsrand (7) erstreckt;
wobei die Kontaktscheibe (1) sandwichartig zwischen dem ersten (12) und dem zweiten (13) Element angeordnet ist und die Drehachse durch die Öffnung (6) verläuft, wobei der umlaufende Rand (5) an dem einen Element und der Öffnungsrand (7) am anderen Element anliegt.

2. Eine Vorrichtung (11) nach Anspruch 1, die ferner ein drittes elektrisch leitendes Element (18) umfasst, das auf der dem ersten Element (12) gegenüberliegenden Seite des zweiten elektrisch leitenden Elements (13) angeordnet ist; sowie
eine weitere Kontaktscheibe (1), die eine kegelstumpfförmige Metallplatte (2) aufweist, die durch eine erste (3) und eine zweite (4) Fläche sowie durch einen umlaufenden Rand (5) definiert wird, wobei die Metallplatte (2) eine Öffnung (6) aufweist, welche durch diese hindurch verläuft und durch einen Öffnungsrand (7) der Platte (2) definiert wird, wobei die Scheibe (1) ferner umfasst: (a) eine Vielzahl von inneren Schlitzen (8), die in gleichmäßigem Abstand zueinander um den Öffnungsrand (7) angeordnet sind, wobei sich jeder innere Schlitz (8) durch die Platte (2) von der ersten Fläche (3) zur zweiten Fläche (4) und vom Öffnungsrand (7) über einen Teil der Strecke bis zum umlaufenden Rand (5) erstreckt; sowie ferner (b) eine Vielzahl von äußeren Schlitzen (9), die in gleichmäßigem Abstand zueinander um den umlaufenden Rand (5) angeordnet sind und fingerartig mit den inneren Schlitzen (8) ineinandergreifen, wobei sich jeder äußere Schlitz (9) durch die Platte (2) von der ersten Fläche (3) zur zweiten Fläche (4) und vom umlaufenden Rand (5) über einen Teil der Strecke bis zum Öffnungsrand (7) erstreckt, und die weitere Kontaktscheibe (1) sandwichartig zwischen dem zweiten (13) und dem dritten (18) Element angeordnet ist, wobei die Drehachse durch die Öffnung (6) verläuft, der umlaufende Rand (5) der weiteren Kontaktscheibe (1) an einem des zweiten (13) beziehungsweise des dritten (18) Elements anliegt und der Öffnungsrand (7) der weiteren Kontaktscheibe (1) an dem jeweils anderen des zweiten (13) beziehungsweise des dritten (18) Elements anliegt.

3. Eine Vorrichtung (11) nach Anspruch 2, die ferner eine Drehachse (14) aufweist, welche entlang der Drehachse vom ersten Element (12) durch eine Öffnung im zweiten Element (13) bis zum dritten Element (18) verläuft.

4. Eine Vorrichtung (11) nach einem der Ansprüche 1 bis 3, wobei es sich bei dem zweiten Element (13) um ein Rad handelt.

5. Eine Vorrichtung (11) nach einem der Ansprüche 1 bis 4, die ferner eine Stromquelle (17) aufweist, welche mit einem des ersten (12) beziehungsweise des zweiten (13) Elements verbunden ist.

6. Eine Vorrichtung (11) nach Anspruch 5, die ferner eine Last (Verbraucher) (19) aufweist, die mit dem anderen des ersten (12) beziehungsweise des zweiten (13) Elements verbunden ist.

7. Eine Vorrichtung (11) nach Anspruch 1, bei der jeder innere Schlitz (8) in gleichmäßigem Abstand zu den benachbarten äußeren Schlitzen (9) angeordnet ist, und umgekehrt.

8. Eine Vorrichtung (11) nach einem der Ansprüche 1 bis 7, die ferner eine elektrisch leitende Beschichtung aufweist, mit welcher die Metallplatte (2) beschichtet ist, wobei die elektrische Leitfähigkeit der Beschichtung höher als die der Metallplatte (2) ist.

## Revendications

1. Dispositif (11) de transfert d'un courant électrique comprenant :
un premier organe conducteur d'électricité (12) ;
un deuxième organe conducteur d'électricité (13) espacé du premier conducteur (12) ;
le deuxième organe conducteur d'électricité (13) étant adapté à pivoter par rapport au premier (12) autour d'un axe de rotation ; et
une rondelle de contact (1), la rondelle de contact (1) comprenant une plaque métallique tronconique (2) définie par une première face (3) et une deuxième face (4) et un bord périphérique (5), la plaque métallique (2) présentant une ouverture (6) s'étendant à travers la plaque définie par un bord d'ouverture (7) de la plaque (2), la rondelle (1) comprenant en outre :
(a) une pluralité de fentes intérieures (8) à espacement égal autour du bord de l'ouverture (7), chaque fente (8) s'étendant à travers la plaque (2) depuis la première face (3) vers la deuxième face (4) et depuis le bord de l'ouverture (7) partiellement vers le bord périphérique (5) ; et
(b) une pluralité de fentes extérieures (9) à espacement égal autour du bord périphérique (5) et intercalées avec les fentes intérieures (8), chaque fente extérieure (9) s'étendant à travers la plaque (2) depuis la première face (3) vers la deuxième face (4) et depuis le bord périphérique (5) partiellement vers le bord périphérique de l'ouverture (7) ;
la rondelle de contact (1) étant prise en sandwich entre le premier organe (12) et le deuxième organe (13), l'axe de rotation passant à travers l'ouverture (6), le bord périphérique (5) venant en butée contre un organe, et le bord de l'ouverture (7) venant en butée contre l'autre organe.

2. Dispositif (11) selon la revendication 1, comprenant en outre un troisième organe conducteur d'électricité (18) disposé du côté opposé du deuxième organe conducteur d'électricité (13) par rapport au premier (12) ; et,
une autre rondelle de contact (1) comprenant :
une plaque tronconique métallique (2) définie par une première face (3) et une deuxième face (4) et un bord périphérique (5), la plaque métallique (2) présentant une ouverture (6) s'étendant à travers la plaque, définie par un bord d'ouverture(7) de la plaque (2), la rondelle (1) comprenant en outre :
une pluralité de fentes intérieures (8) à espacement égal autour du bord de l'ouverture (7), chaque fente intérieure (8) s'étendant à travers la plaque (2) depuis la première face (3) vers la deuxième face (4) et depuis le bord de l'ouverture (7) partiellement vers le bord périphérique (5) ; et
(b) une pluralité de fentes extérieures (9) à espacement égal autour du bord périphérique (5) et intercalées avec les fentes intérieures (8), chaque fente extérieure (9) s'étendant à travers la plaque (2) depuis la première face (3) vers la deuxième face (4) et depuis le bord périphérique (5) partiellement vers le bord périphérique de l'ouverture (7), la rondelle de contact supplémentaire (1) étant prise en sandwich entre le deuxième organe (13) et le troisième organe (18), l'axe de rotation passant à travers l'ouverture(6), le bord périphérique de la rondelle de contact supplémentaire (1) venant en butée contre l'un parmi le deuxième organe (13) et le troisième organe (18) et le bord de l'ouverture (7) de la rondelle de contact supplémentaire (1) venant en butée contre l'autre organe parmi le deuxième organe (13) et du troisième organe (13).

3. Dispositif (11) selon la revendication 2, comprenant en outre un essieu de rotation (14) s'étendant le long de l'axe de rotation depuis le premier organe (12), à travers une ouverture dans le deuxième organe (13) jusqu'au troisième organe (18).

4. Dispositif (11) selon l'une quelconque des revendications 1 à 3, selon lequel le deuxième organe (13) est une roue.

5. Dispositif (11) selon l'une quelconque des revendications 1 à 4, comprenant en outre une source de courant (17) connectée à l'un parmi le premier organe (12) et le deuxième organe (12),

6. Dispositif (11) selon la revendication 5, comprenant en outre une charge (19) connectée à l'autre organe parmi le premier organe (12) et le deuxième organe.

7. Dispositif (11) selon la revendication 1, selon lequel chaque fente intérieure (8) est espacée de manière égale de chaque fente extérieure adjacente (9) et vice versa.

8. Dispositif (11) selon l'une quelconque des revendications 1 à 7, comprenant en outre une couche de revêtement conductrice d'électricité revêtant la plaque métallique (2), la conductivité électrique de la couche de revêtement étant supérieure à celle de la plaque métallique (2).
